# EUROPÄISCHE PATENTSCHRIFT

(11) **EP 0 564 842 B1**
(45) Veröffentlichungstag und Bekanntmachung des Hinweises auf die Patenterteilung: **10.07.1996**
(21) Anmeldenummer: 93104027.3
(22) Anmeldetag: 12.03.1993
(51) Int. Cl.: B23Q 1/00

(54) **Werkzeugmaschine mit Drehtisch**
Machine tool with turntable
Machine-outil avec table tournante

(30) Priorität: 04.04.1992 DE 4211348
(43) Veröffentlichungstag der Anmeldung: 13.10.1993
(73) Patentinhaber: CHIRON-WERKE GMBH & CO. KG, D-78532 Tuttlingen (DE)
(72) Erfinder: Rütschle, Eugen, Dipl.-Ing., W-7202 Mühlheim/Donau (DE); Winkler, Hans-Henning, Dr.-Ing., W-7200 Tuttlingen (DE)
(74) Vertreter: Gahlert, Stefan, Dr.-Ing.

(56) Entgegenhaltungen:
- EP-A- 0 393 260
- DE-A- 1 301 214
- DE-A- 3 150 782
- US-A- 4 678 077
- PATENT ABSTRACTS OF JAPAN vol. 8, no. 229 (E-273)20. Oktober 1984 & JP-A-59 110 367 (SEIKO DENSHI KOGYO)

## Beschreibung

Die Erfindung betrifft eine Werkzeugmaschine mit einem Drehtisch, welcher ein Oberteil mit einer Montageplatte aufweist, welches gegenüber einem ortsfesten Unterteil um eine Drehachse verschwenkbar angeordnet ist, und mit mindestens einer Leitung zur Zuführung von Energie an das Oberteil, wobei die Leitung über eine Kupplung zwischen Oberteil und Unterteil geführt ist, welche zu Beginn eines Schwenkvorganges geöffnet wird und am Ende eines Schwenkvorganges geschlossen wird.

Eine derartige Werkzeugmaschine ist aus der DE-AS-13 01 214 bekannt.

Bei Werkzeugmaschinen ist es vielfach üblich, nicht nur den das Bearbeitungswerkzeug tragenden Teil der Maschine, beispielsweise den Spindelstock, verfahrbar zu gestalten, sondern darüberhinaus auch den das Werkstück tragenden Tisch in einer linearen oder einer Drehbewegung zu verfahren. Diese Bewegung des Tisches kann einmal dazu dienen, das Werkzeug zum Bearbeiten an einem ortsfesten Werkzeug entlangzuführen. Bei numerisch gesteuerten Werkzeugmaschinen werden Drehtische jedoch auch dazu verwendet, um während der Bearbeitung eines Werkstückes auf der einen Seite des Drehtisches bereits das nächste Werkzeug auf der anderen Seite montieren zu können, so daß durch Verdrehen des Tisches um beispielsweise 180 ° die Bearbeitung des neuen Werkstückes unmittelbar nach Beendigung der Bearbeitung des alten Werkstückes aufgenommen werden kann. Das bearbeitete Werkstück kann dann, während das neue Werkstück bearbeitet wird, abgenommen werden und an seiner Stelle wird dann ein neues, noch unbearbeitetes Werkstück montiert.

Will man Werkstücke auf einem Drehtisch der vorstehend beschriebenen Art bearbeiten, so ist es mitunter erforderlich, vom raumfesten Teil der Werkzeugmaschine Verbindungen zum Drehtisch herzustellen. Diese Verbindungen können dazu dienen, um Energie in Gestalt von Druckluft oder Hydraulikflüssigkeit von der Werkzeugmaschine zum Drehtisch zu fördern, oder Signale zwischen der Werkzeugmaschine und dem Werkstücktisch auszutauschen. Typischerweise ist dies der Fall, wenn das Werkstück auf dem Werkstücktisch mittels einer Fremdkraft betätigten Spannvorrichtung oder eines Teilapparates gehalten wird. Zum Betätigen der Spannvorrichtung und des Teilapparates sind Energien erforderlich, die z.B. in Form von elektrischem Strom, Preßluft oder Hydraulikflüssigkeit zugeführt werden können. Außerdem können Steuersignale zum gezielten Betätigen dieser Vorrichtungen auf den Werkzeugtisch übertragen werden, ebenso wie Signale von Endschaltern, Sensoren und dgl., die an den Vorrichtungen angeordnet sind, vom Werkstücktisch wieder zurück zur Werkzeugmaschine übertragen werden können.

Bei der aus der eingangs genannten DE-AS-13 01 214 bekannten Werkzeugmaschine wird mechanische Drehenergie auf einen Drehteller übertragen, auf dem mehrere Aufspannvorrichtungen für zu bearbeitende Werkstücke angeordnet sind. Für diese Übertragung von Drehenergie sind Kupplungen vorgesehen, die eine an dem ortsfesten Unterteil drehbar gelagerte Welle sowie ein der Aufspannvorrichtung zugeordnetes Eingriffsteil aufweisen. An dem Kopf der Welle ist ein Steg vorgesehen, der in eine Längsnut des Eingriffsteiles eingreift und so eine drehschlüssige Verbindung herstellt. Zum Verdrehen des Drehtellers wird die Kupplung so gestellt, daß die Nut mit darin befindlichem Steg waagerecht ausgerichtet ist, so daß beim Verdrehen des Drehtellers der Steg aus der Nut freikommt.

Aus der DE 83 16 776 U1 ist es bekannt, eine Verbindung zwischen dem raumfesten Teil der Werkzeugmaschine und dem Drehtisch dadurch herzustellen, daß konzentrisch zur Drehachse des Drehtisches durch diesen hindurch mindestens eine elektrische Leitung und/oder Fluidleitung von der Unterseite des Tisches her zur Oberseite geführt ist. Im Zentrum des Drehtisches ist eine geeignete, mit dem Tisch verdrehbare Kupplung angeordnet. Innerhalb des Tisches ist ein flexibles Leitungsstück innerhalb eines Kastens derart angordnet, daß das Leitungsstück eine begrenzte Drehbewegung von beispielsweise 180° des Drehtisches erlaubt. Ein Ende des Leitungsstückes ist mit der zentralen Kupplung verbunden und das andere Ende des Leitungsstückes ist beispielsweise durch ein raumfestes zentrales Rohr nach unten aus dem Drehtisch herausgeführt.

Es hat sich in der Praxis gezeigt, daß die bekannte Werkzeugmaschine nicht den Anforderungen aller Anwendungsfälle genügt, insbesondere erfordert das begrenzt verdrehbare Leitungsstück einen beträchtlichen Raum im Werkstücktisch, die herzustellenden Verbindungen sind einigermaßen kompliziert und können daher bei extremer Beanspruchung Quelle von Störungen sein. Außerdem ist die bekannte Anordnung um so komplizierter und aufwendiger, je mehr Leitungen zum Werkstücktisch geführt werden müssen. Schließlich ist der Drehwinkel naturgemäß durch das begrenzt verdrehbare Leitungsstück begrenzt.

Durch die DE 36 20 086 C2 ist eine weitere Werkzeugmaschine bekannt geworden, bei der ein Werkstücktisch derart abwechselnd gegenläufig um einen Winkel von 180° verdrehbar ist, daß jeweils eine Hälfte der Oberfläche des Werkstücktisches abwechselnd eine Bearbeitungsseite im Arbeitsbereich des Spindelstocks und eine Bestückungsseite im Abstand vom Arbeitsbereich der Spindel bildet. Um Signale und/oder Energie von einem raumfesten Teil der Werkzeugmaschine zum Werkstücktisch zu führen, sind die Leitungen oberhalb des Werkstücktisches an einem Punkt in der Nähe der Achse an dem raumfesten Teil der Werkzeugmaschine angeschlossen und lose nach unten hängend mit einem Anschlußkasten des Werkstücktisches verbunden.

Auf diese Weise können die lose nach unten hängenden Leitungen an beiden Enden mit handelsüblichen Anschlußstücken angeschlossen werden, die leicht zugänglich sind. Dadurch, daß die Leitungen oben in der Nähe der Drehachse des Werkstücktisches angeschlossen sind, ergibt sich eine symmetrische und die Leitungen nur minimal mechanisch verformende Bewegung, wenn der Werkstücktisch jeweils um 180° hin- und hergedreht wird.

Als nachteilig haben sich jedoch die frei herabhängenden Leitungen erwiesen. Diese können zum einen mechanisch beschädigt werden, zum anderen sind sie ständig dem Einfluß von Kühlschmiermittel ausgesetzt, welches auf Kunststoff- und Gummiisolierungen einen agressiven Einfluß ausüben kann. Ferner können sich die herabhängenden Leitungen als störend erweisen, wenn das Bedienungspersonal im Bereich des Drehtisches Montage- oder Wartungsarbeiten durchführen muß. Schließlich ist bei der vorbekannten Anordnung vorausgesetzt, daß der Drehtisch abwechselnd in entgegengesetzter Richtung verschwenkt wird. Ein Verschwenken des Drehtisches in jeweils gleicher Drehrichtung ist dagegen nicht möglich, da dies zu einem Aufwickeln und schließlich zu einem Abreißen der Leitungen führen würde.

Der Erfindung liegt daher die Aufgabe zugrunde, eine Werkzeugmaschine der eingangs genannten Art derart zu verbessern, daß eine einfache und zuverlässige Leitungsführung vom ortsfesten Teil der Werkzeugmaschine zum Drehtisch ermöglicht wird, und durch die der Bearbeitungsraum oberhalb des Drehtisches möglichst wenig beeinträchtigt wird, wobei eine sichere Verbindung auch zahlreicher, verschiedenartiger Leitungen möglich sein soll.

Gemäß der vorliegenden Erfindung wird diese Aufgabe dadurch gelöst, daß bei einer Werkzeugmaschine der eingangs genannten Art eine Einrichtung zum Anheben und Verschwenken und nachfolgendem Absenken des Oberteils auf das Unterteil vorgesehen ist, die Kupplung durch die Hub- bzw. Absenkbewegung bei jedem Schwenkvorgang geöffnet bzw. geschlossen wird, und die mindestens eine Kupplung mindestens ein oberes und ein unteres Kupplungsmodul aufweist, welche bei der Hub- bzw. Absenkbewegung voneinander getrennt bzw. miteinander verbunden werden, so daß die Leitung zur Zuführung von Fluiden oder elektrischer oder mechanischer Energie verwendbar ist.

Dadurch, daß die Leitungen von unten her vom ortsfesten Unterteil über Kupplungen mit dem Oberteil verbunden werden, befindet sich die gesamte Leitungsführung unterhalb des Drehtisches, so daß diese weitgehend von Umwelteinflüssen abgeschirmt ist, insbesondere dann, wenn der Drehtisch gekapselt ausgeführt ist. Der Raum oberhalb des Drehtisches ist dagegen völlig frei von Leitungen, so daß eine Beeinträchtigung des Arbeitsbereiches bzw. eine Behinderung des Bedienungspersonals vermieden wird.

Die Kupplungen können aus an sich bekannten Kupplungselementen bestehen, welche derart angeordnet werden, daß die Kupplungen jeweils zu Beginn eines Schwenkvorganges gelöst werden und am Ende eines Schwenkvorganges geschlossen werden. Auf diese Weise ist eine sichere Verbindung auch zahlreicher, verschiedenartiger Leitungen möglich, da derartige Kupplungselemente in zahlreichen Ausführungen bekannt und bewährt sind, um elektrische Signale oder Energie zu übertragen oder um Pneumatik- oder Hydraulik-Leitungen zu verbinden.

In vorbestimmten Winkelpositionen können am Oberteil des Drehtisches verschiedene Kupplungselemente angeordnet werden, um in verschiedenen Winkelpositionen eine Verbindung zum Oberteil des Drehtisches herzustellen. Damit ist es möglich, nicht nur bei der meist üblichen Verschwenkung des Drehtisches um 180° jeweils eine Leitungsverbindung herzustellen, sondern auch bei einer Verschwenkung des Drehtisches um beispielsweise nur 90°.

Da eine feste Leitungsverbindung zwischen dem ortsfesten Unterteil des Drehtisches und dem drehbeweglichen Oberteil des Drehtisches nicht besteht, kann der Drehtisch beliebig oft im gleichen Drehsinne verdreht werden. Dies kann bei der Bearbeitung verschiedener Werkstücke vorteilhaft ausgenutzt werden, darüberhinaus kann der Drehantrieb einfacher ausgeführt werden, falls eine Drehrichtungsumkehr nicht erforderlich ist.

Weiter wird die Tatsache ausgenutzt, daß zur genauen Positionierung des Drehtisches in der Regel Positionierelemente zwischen Oberteil und Unterteil des Drehtisches vorgesehen sind, durch welche beim Absenken des Drehtisches die genaue Endlage erreicht wird.

Die Kupplungen zwischen Oberteil und Unterteil sind nun gerade derart angeordnet, daß diese beim Anheben des Drehtisches zu Beginn einer jeden Schwenkbewegung geöffnet werden und bei der Absenkbewegung am Ende jeder Schwenkbewegung geschlossen werden. Auf diese Weise wird die ohnehin notwendige Hub- und Absenkbewegung beim Verschwenken des Drehtisches vorteilhaft zum Lösen bzw. Schließen der Leitungsverbindungen ausgenutzt.

Durch diese Maßnahme werden in vorteilhafte Weise vorgefertigte Kupplungsmodule zur Verbindung verwendet, wodurch eine zuverlässige Übertragung gewährleistet ist.

Bei einer weiteren Ausgestaltung der Erfindung ist mindestens ein oberes und unteres Kupplungsmodulpaar zur gleichzeitigen Verbindung mehrerer Einzelleitungen vorgesehen.

Soweit die Verbindung mehrerer Einzelleitungen erforderlich ist, also z. B. sowohl elektrische Signale übertragen werden müssen als auch Druckluft zugeführt werden muß, so können die verschiedenen Einzelleitungen auf diese Weise jeweils zusammengefaßt werden und mit Hilfe eines einzigen oder einiger weniger Kupplungsmodulpaare übertragen werden. Da die gleichzeitige Verbindung mehrerer Einzelleitungen mit Hilfe eines Kupplungsmoduls eine bewährte Technik ist, kann auf diese Weise der Platzbedarf reduziert werden und eine sichere Verbindung gewährleistet werden.

In weiter vorteilhafter Ausgestaltung der Erfindung ist mindestens eine Kupplung als Wellen/Naben-Verbindung zur Übertragung von Drehenergie auf das Oberteil ausgeführt.

Diese Maßnahme hat den Vorteil, daß die unmittelbare Übertragung von mechanischer Energie auf das Oberteil des Drehtisches auf einfache Weise ermöglicht wird.

Bei einer besonders bevorzugten Variante der vorgenannten Möglichkeit ist die Wellen/Naben-Verbindung mit einer Teileinrichtung verbindbar.

Auf diese Weise ist es möglich, eine Teileinrichtung auf der Montageplatte des Oberteils zu verwenden, ohne daß hierzu ein gesonderter Antrieb auf der Montageplatte des Drehtisches vorgesehen werden muß, wodurch der Platzbedarf in diesem Bereich reduziert wird.

Bei einer weiteren vorteilhaften Ausgestaltung der Erfindung sind am Oberteil und am Unterteil Verzahnungselemente vorgesehen, welche beim Absenken des Oberteils auf das Unterteil zur Positionierung des Drehtisches ineinandergreifen.

Auf diese Weise wird eine genaue Positionierung des Drehtisches besonders zuverlässig gewährleistet. Der Antrieb zum Anheben, Verschwenken und Absenken des Drehtisches muß dabei nur eine geringe Verschwenkgenauigkeit aufweisen, die ausreicht, um ein Eingreifen in die jeweiligen Verzahnungselemente sicherzustellen.

In vorteilhafter Weiterbildung ist hierzu am Oberteil und Unterteil eine Hirth-Verzahnung vorgesehen.

Eine solche Verzahnung weist eine besonders hohe Positioniergenauigkeit auf und ist zur Übertragung großer Kräfte geeignet, die bei der Bearbeitung von auf dem Drehtisch befestigten Werkstücken auftreten können.

In vorteilhafter Weiterbildung der Erfindung ist auf der Montageplatte mindestens ein Anschlußmodul vorgesehen, mit welchem mindestens eine Leitung verbunden ist.

Diese Maßnahme hat den Vorteil, daß die Leitungsverbindungen zwischen dem Werkstück bzw. etwaigen Hilfsaggregaten und dem Drehtisch auf einfache Weise als Schnellverbindungen herstellbar sind, z.B. als Steckverbindungen, Bajonett- oder Schraubverbindungen.

Obwohl es grundsätzlich möglich ist, die Kupplungen zwischen Oberteil und Unterteil an beliebigen Positionen anzuordnen, hat es sich als besonders vorteilhaft erwiesen, wenn die Kupplungen klappsymmetrisch zur Trennlinie zwischen Bearbeitungsseite und Bestückungsseite angeordnet sind.

Soweit der Drehtisch jeweils um 180° verschwenkt wird, um Werkstücke zwischen der Bearbeitungsseite und der Bestückungsseite auszutauschen, können bei dieser Anordnung die Leitungen von den Kupplungen des Oberteils des Drehstückes senkrecht nach oben zu entsprechenden Anschlußmodulen geführt werden, die dann unabhängig von der Stellung des Drehtisches sowohl von der Bearbeitungsseite als auch von der Bestückungsseite aus gut zugänglich sind.

Desweiteren ist es ohne weiteres möglich, ein einziges Anschlußmodul in der Mitte der Montageplatte vorzusehen, welches mit beiden Kupplungen des Oberteils verbunden ist. Darüberhinaus können natürlich auch weitere Kupplungsmodulpaare zwischen Oberteil und Unterteil sowie weitere Anschlußmodule auf der Montageplatte vorgesehen sein.

Bei einer weiteren Ausgestaltung der Erfindung weist die Einrichtung zum Anheben, Verschwenken und Absenken des Oberteils eine zentrale Welle auf, welche an ihrem oberen Ende mit dem Oberteil starr verbunden ist und welche mit einem Hub- und Drehantrieb zum Anheben, Verschwenken und Absenken des Oberteils verbunden ist.

Auf diese Weise ist es möglich, den Hub- und Drehantrieb unterhalb des Drehtisches im Bereich des Maschinenbettes anzuordnen, wodurch der Platzbedarf reduziert wird.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine vereinfachte schematische Ansicht des Drehtisches einer erfindungsgemäßen Werkzeugmaschine;
- Fig. 2: einen Schnitt des Drehtisches gemäß Fig.1 längs der Linie II-II und
- Fig. 3: einen Schnitt des Drehtisches gemäß Fig. 2 längs der Linie III-III.

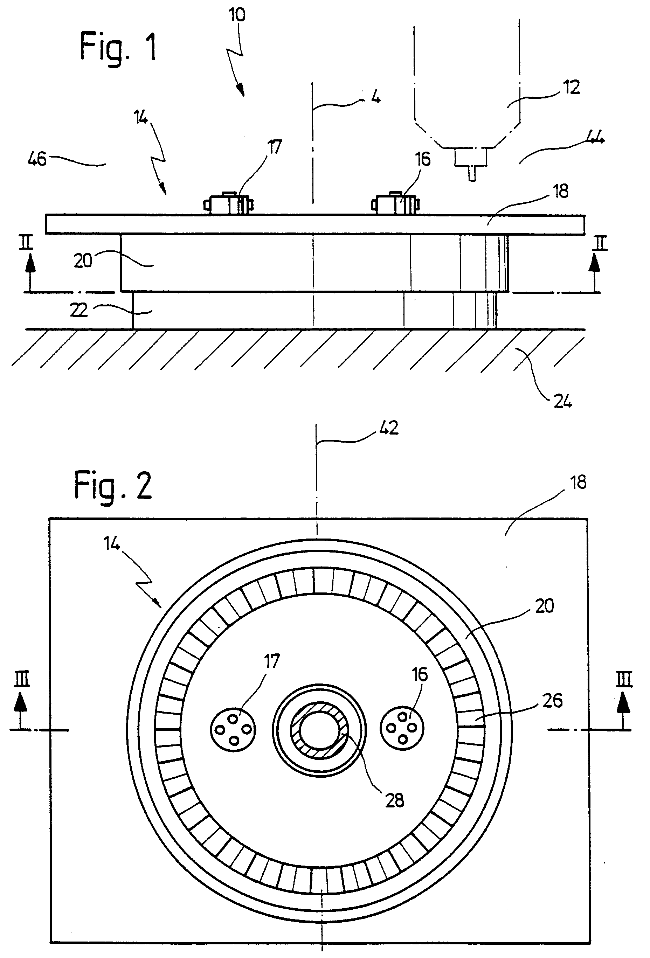

In Fig. 1 ist ein Drehtisch 14 einer erfindungsgemäßen Werkzeugmaschine dargestellt, welche insgesamt mit der Ziffer 10 bezeichnet ist.

Der Drehtisch 14 ist um 180° verschwenkbar, um Werkstücke, welche auf der Bestückungsseite des Drehtisches auf diesen aufgespannt und zur Bearbeitung vorbereitet werden, nach Verschwenkung des Drehtisches um 180° auf der Bearbeitungsseite bearbeiten zu können. Auf der Bearbeitungsseite ist der Spindelstock 12 schematisch angedeutet, während auf die Darstellung der übrigen Bestandteile der Werkzeugmaschine verzichtet wurde, da diese grundsätzlich bekannt sind.

Der Drehtisch 14 weist ein zylindrisches Oberteil 20 auf, an dessen Oberseite eine ebene Montageplatte 18 zur Aufnahme von Werkstücken vorgesehen ist. Das Oberteil 20 ist um eine Drehachse 4 drehbar angeordnet und liegt auf einem dazu konzentrischen, zylindrischen Unterteil 22 auf, das auf dem Maschinenbett 24 montiert ist.

Auf der Montageplatte 18 sind zwei Anschlußmodule 16, 17 angeordnet, die in einer nachfolgend zu beschreibenden Weise mit Leitungen für Zuführung von elektrischer oder mechanischer Energie, zur Abnahme elektrischer Signale, mit Pneumatik- oder Hydraulik-Leitungen oder mit Leitungen zur Kühlschmiermittel-Zufuhr verbunden sind. Die Anschlußmodule 16, 17 ermöglichen einen einfachen Anschluß an diese Leitungen über Steckverbindungen.

Die Werkzeugmaschine 10, die von einer nicht dargestellten Spritzschutzkabine umgeben ist, ist durch den Drehtisch 14 in eine Bearbeitungsseite 44 und in eine Bestückungsseite 46 aufgeteilt, die durch eine durch die Mittes des Drehtisches verlaufende Trennlinie 42 voneinander getrennt sind (Fig. 2).

Zu bearbeitende Werkstücke werden zunächst auf der Bestückungsseite 46 auf die Montageplatte 18 des Drehtisches 14 aufgespannt und zur Bearbeitung vorbereitet. Soweit notwendig, werden entsprechende Versorgungs- oder Signalleitungen angebracht und mit dem Anschlußmodul 17 verbunden. Parallel dazu kann eine Bearbeitung eines bereits eingespannten Werkstückes auf der gegenüberliegenden Bearbeitungsseite 44 durchgeführt werden.

Sobald der Bearbeitungsvorgang beendet ist, wird der Drehtisch 14 um 180° verschwenkt, und die Bearbeitung des vorher auf der Bestückungsseite 46 aufgespannten Werkstückes kann beginnen. Das bereits bearbeitete Werkstück kann nun ausgespannt werden und ein neues Werkstück zur nachfolgenden Bearbeitung vorbereitet werden.

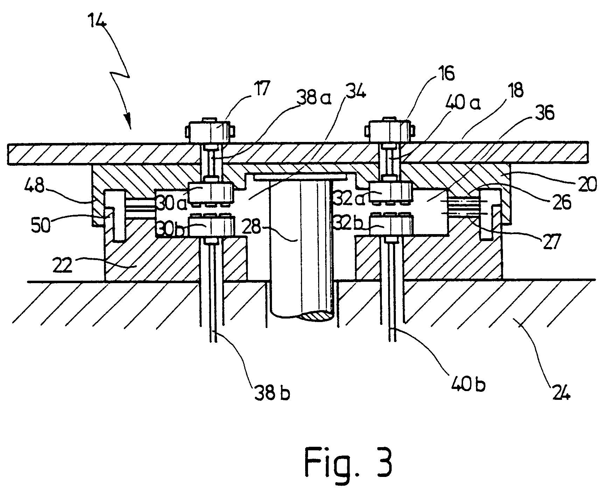

Wie aus den Figuren 2 und 3 ersichtlich, ist zum Antrieb des Drehtisches 14 eine zentrale Welle 28 vorgesehen, welche durch das Unterteil 22 von unten her hindurchgeführt ist und an ihrem oberen Ende stirnseitig mit dem Oberteil 20 verschraubt ist. Die Welle 28 ist an ihrem unteren Ende mit einem Hub- und Drehantrieb verbunden, über welchen das Oberteil 20 vom Unterteil 22 abgehoben werden kann, verschwenkt werden kann und wieder auf dem Unterteil 22 abgesenkt werden kann. An der Unterseite des Oberteils 20 ist ein umlaufender Zahnkranz 26 mit einer Hirth-Verzahnung vorgesehen, welche mit der Verzahnungsseite nach unten weist. Ein entsprechender Zahnkranz 27 ist an der Oberseite des Unterteils 22 vorgesehen, so daß das Oberteil 20 im abgesenkten Zustand mit seinem Zahnkranz 26 auf dem Zahnkranz 27 des Unterteils 22 aufliegt. Durch die Hirth-Verzahnung ist dabei eine genaue Winkelpositionierung und eine genaue Positionierung in der Vertikalen gewährleistet. Die Verzahnung ist ferner selbst zentrierend, so daß eine Zentrierung des Oberteils 20 auf dem Unterteil 22 nicht erforderlich ist. Ein an der Außenseite des Oberteils 20 topfförmig nach unten vorstehender zylindrischer Mantel 48, der an einen entsprechend geformten zylindrischen Mantel 50 an der Außenseite des Unterteils 22 gleitend anliegt, dient lediglich einer Abkapselung des Drehtisches 14 gegen Umwelteinflüsse, wie Schmutz, Kühlschmiermittel und dgl., nicht jedoch einer Zentrierung des Oberteils 20 auf dem Unterteil 22. Zum Zwecke einer besseren Abdichtung kann zwischen den beiden Mantelflächen 48 und 50 zusätzlich eine Dichtung vorgesehen sein (nicht dargestellt).

Die Anschlußmodule 16, 17 sind über senkrechte Versorgungsleitungen 38a, 40a mit Kupplungsmodulen 30a, 32a verbunden, welche an der Unterseite des Oberteils 20 angeordnet sind.

Gegenüber diesen Kupplungsmodulen 30a, 32a sind am Unterteil 22 entsprechende Kupplungsmodule 30b, 32b vorgesehen, an die Versorgungsleitungen 38b, 40b angeschlossen sind, die von unten her durch das Maschinenbett 24 herangeführt sind.

In der in Fig. 3 gezeigten Stellung ist das Oberteil 20 durch die Welle 28 vom Unterteil 22 abgehoben, so daß die Zahnkränze 26, 27 und die Kupplungsmodule 30a, 30b bzw. 32a, 32b voneinander getrennt sind.

In dieser Stellung ist eine Verschwenkung des Oberteils 20 gegenüber dem Unterteil 22 möglich, im gezeigten Beispiel ist eine Verschwenkung um 180° vorgesehen.

Nach Erreichen des vorbestimmten Schwenkwinkels kann das Oberteil 20 durch Absenken der Welle 28 wieder auf das Unterteil 22 abgesenkt werden, bis das Oberteil 20 mit seinem Zahnkranz 26 auf den Zahnkranz 27 des Unterteils 22 zur Auflage kommt. Dabei werden gleichzeitig die Kupplungsmodule 30a, 30b und 32a, 32b miteinander verbunden, wodurch sämtliche über diese Kupplungen (34, 36) geführte Leitungen 38a, 38b bzw. 40a, 40b, die in Fig. 3 nur schematisch als gebündelte Leitungen dargestellt sind, miteinander verbunden werden.
Auf diese Weise sind die Anschlußmodule 16, 17 unabhängig von der Winkelstellung des Drehtisches jeweils in der Endlage mit den Versorgungsleitungen verbunden.

Es ist möglich, unterschiedliche Leitungen mit der Bearbeitungsseite und mit der Bestückungsseite des Drehtisches zu verbinden, wenn z.B. nur jeweils auf der Bestückungsseite ein Druckluftanschluß benötigt wird, dieser jedoch auf der Bearbeitungsseite nicht notwendig ist. Sofern jedoch sowohl auf der Bearbeitungsseite als auch auf der Bestückungsseite die gleichen Leitungen benötigt werden, kann auch ein zentrales Anschlußmodul auf der Oberseite der Montageplatte 18 angeordnet sein, das dann mit beiden Kupplungsmodulen 30a, 32a des Oberteils 20 verbunden ist. Darüberhinaus können natürlich auch weitere Kupplungsmodule zur Herstellung weiterer Leitungsverbindungen zwischen Oberteil 20 und Unterteil 22 vorgesehen sein oder auch weitere Anschlußmodule auf der Montageplatte angeordnet sein.

## Patentansprüche

1. Werkzeugmaschine mit einem Drehtisch (14), welcher ein Oberteil (20) mit einer Montageplatte (18) aufweist, welches gegenüber einem ortsfesten Unterteil (22) um eine Drehachse (4) verschwenkbar angeordnet ist, und mit mindestens einer Leitung (38a,b; 40a,b) zur Zuführung von Energie an das Oberteil (20), wobei die Leitung (38a,b; 40a,b) über mindestens eine Kupplung (34, 36) zwischen Oberteil (20) und Unterteil (22) geführt ist, welche zu Beginn eines Schwenkvorganges geöffnet wird und am Ende eines Schwenkvorganges geschlossen wird, dadurch gekennzeichnet, daßeine Einrichtung (26, 27, 28) zum Anheben und Verschwenken und nachfolgenden Absenken des Oberteils (20) auf das Unterteil (22) vorgesehen ist, daß die Kupplung (34, 36) durch die Hub- bzw. Absenkbewegung bei jedem Schwenkvorgang geöffnet bzw. geschlossen wird, und daß die mindestens eine Kupplung (34, 36) einoberes (30a, 32a) sowie ein unteres Kupplungsmodul (30b, 32b) aufweist, welche bei der Hub- bzw. Absenkbewegung voneinander getrennt bzw. miteinander verbunden werden, so daß die Leitung (38a,b; 40a,b) zur Zuführung von Fluiden oder elektrischer oder mechanischer Energie verwendbar ist.

2. Werkzeugmaschine nach Anspruch 1, dadurch gekennzeichnet, daß mindestens ein oberes und unteres Kupplungsmodulpaar (30a,b; 32a,b) zur gleichzeitigen Verbindung mehrerer Einzelleitungen vorgesehen ist.

3. Werkzeugmaschine nach einem der vorhergehenden Ansprüche, dadurch gekennzeichnet, daß mindestens eine Kupplung als Wellen/Naben-Verbindung zur Übertragung von Drehenergie auf das Oberteil (20) ausgeführt ist.

4. Werkzeugmaschine nach Anspruch 3, dadurch gekennzeichnet, daß die Wellen/Naben-Verbindung mit einer Teileinrichtung verbindbar ist.

5. Werkzeugmaschine nach einem der vorhergehenden Ansprüche, dadurch gekennzeichnet, daß am Oberteil (20) und am Unterteil (22) Verzahnungselemente vorgesehen sind, welche beim Absenken des Oberteils (20) auf das Unterteil (22) zur Positionierung des Drehtisches (14) ineinandergreifen.

6. Werkzeugmaschine nach Anspruch 5, dadurch gekennzeichnet, daß Oberteil (20) und Unterteil (22) eine Hirth-Verzahnung (26, 27) aufweisen.

7. Werkzeugmaschine nach einem dervorhergehenden Ansprüche, dadurch gekennzeichnet, daß auf der Montageplatte (18) mindestens ein Anschlußmodul (16, 17) vorgesehen ist, mit welchem mindestens eine Leitung (38a, b; 40a, b) verbunden ist.

8. Werkzeugmaschine nach einem der vorhergehenden Ansprüche, dadurch gekennzeichnet, daß die Kupplungen (34, 36) klappsymmetrisch zur Trennlinie (42) zwischen Bearbeitungsseite und Bestückungsseite angeordnet sind.

9. Werkzeugmaschine nach einem der vorhergehenden Ansprüche, dadurch gekennzeichnet, daß die Einrichtung (26, 27, 28) zum Anheben, Verschwenken und Absenken des Oberteils (20) eine zentrale Welle (28) aufweist, welche an ihrem oberen Ende mit dem Oberteil (20) starr verbunden ist und welche mit einem Hub- und Drehantrieb zum Anheben, Verschwenken und Absenken des Oberteils (20) verbunden ist.

## Claims

1. Machine tool, comprising a turntable (14) having an upper part (20) with a mounting plate (18) which is arranged so as to pivot about a rotation axis (34) with respect to a stationary lower part (23), and at least one line (38a, b; 40a, b) to deliver energy to the upper part (20), the line (38a, b; 40a, b) being guided by means of at least one coupling (34, 36) between the upper part (20) and the lower part (22), wherein said coupling is opened at the beginning of a pivoting operation and closed at the end of a pivoting operation,
characterized in that a device (26, 27, 28) is provided for lifting and pivoting and subsequently lowering of the upper part (20) onto the lower part (22), the coupling (34, 36) is opened and closed by the lifting and lowering movements, respectively, that occur with each pivoting operation, and the at least one coupling (34, 36) comprises an upper (30a, 32a) and a lower coupling module (30b, 32b), which are separated from or connected to one another in the course of the lifting and lowering movements, respectively, such that the line (38a, b; 40a, b) can be used to deliver fluids or electrical or mechnical energy.

2. Machine tool according to claim 1, characterized in that at least an upper and a lower coupling module pair (30a, b; 32a, b) is provided for simultaneous connection of a plurality of individual lines.

3. Machine tool according to any of the preceding claims, characterized in that at least one coupling is configured as a shaft/hub connection to transfer rotation energy to the upper part (20).

4. Machine tool according to claim 3, characterized in that the shaft/hub connection can be connected to a dividing apparatus.

5. Machine tool according to any of the preceding claims, characterized in that at the upper part (20) and the lower part (22) spline elements are provided which engage with one another when the upper part (20) is lowered onto the lower part (22) for positioning the turntable (14).

6. Machine tool according to claim 5, characterized in that the upper part (20) and the lower part (22) comprise a serration splining (26, 27).

7. Machine tool according to any of the proceeding claims, characterized in that on said mounting plate (18) there is provided at least one connection module (16, 17), to which at least one line (38a, b; 40a, b) is connected.

8. Machine tool according to any of the preceding claims, characterized in that the couplings (34, 36) are arranged with mirror symmetry on either side of a separating line (42) between a machining side and a placement side.

9. Machine tool according to any of the preceding claims, characterized in that the device (26, 27, 28) for lifting, pivoting and lowering of the upper part (20) comprises a central shaft (28) that is rigidly connected at its top end to the upper part (20), and that is connected to a lifting and rotating drive for lifting, pivoting and lowering of the upper part (20).

## Revendications

1. Machine-outil comportant une table tournante (14), qui présente une partie supérieure (20) avec une plaque de montage (18), qui est montée de manière à pouvoir tourner par rapport à une partie inférieure (22) fixe, autour d'un axe de rotation (34), et comportant au moins une conduite (38a, b ; 40a, b) pour l'alimentation en énergie de la partie supérieure (20), la conduite (38a, b ; 40, b) passant par au moins un accouplement (34, 36) entre la partie supérieure (20) et la partie inférieure (22), qui est ouvert au début d'un pivotement et est fermé à la fin d'un pivotement, caractérisée en ce qu'un dispositif (26, 27, 28) est prévu pour le relèvement et le pivotement et l'abaissement subséquent de la partie supérieure (20) sur la partie inférieure (22), en ce que l'accouplement (34, 36) est respectivement ouvert et fermé par le mouvement de levage ou d'abaissement à chaque pivotement, et en ce qu'au moins un accouplement (34, 36) comporte un module d'accouplement supérieur (30a, 32a) ainsi qu'un module d'accouplement inférieur (30b, 32b), qui sont respectivement séparés ou reliés entre eux lors du mouvement de levage ou d'abaissement, de sorte que la conduite (38a, b ; 40a, b) peut être utilisée pour l'alimentation de fluides ou d'énergie électrique ou mécanique.

2. Machine-outil selon la revendication 1, caractérisée en ce qu'au moins une paire de modules d'accouplement supérieur et inférieur (30a, b ; 32a, b) est prévue pour la liaison simultanée de plusieurs conduites individuelles.

3. Machine-outil selon l'une des revendications précédentes, caractérisée en ce qu'au moins un accouplement est réalisé en tant que liaison arbre/moyeu pour la transmission d'énergie de rotation à la partie supérieure (20).

4. Machine-outil selon la revendication 3, caractérisée en ce que la liaison arbre/moyeu peut être reliée à un dispositif diviseur.

5. Machine-outil selon l'une des revendications précédentes, caractérisée en ce que sur la partie supérieure (20) et sur la partie inférieure (22) sont prévus des éléments munis d'une denture, qui engrènent les uns dans les autres lors de l'abaissement de la partie supérieure (20) sur la partie inférieure (22), en vue du positionnement de la table tournante (14).

6. Machine-outil selon la revendication 5, caractérisée en ce que la partie supérieure (20) et la partie inférieure (22) présentent une denture Hirth (26, 27).

7. Machine-outil selon l'une des revendications précédentes, caractérisée en ce que sur la plaque de montage (18) est prévu au moins un module de raccordement (16, 17), avec lequel est reliée au moins une conduite (38a, b ; 40a, b).

8. Machine-outil selon l'une des revendications précédentes, caractérisée en ce que les accouplements (34, 36) sont disposés symétriquement par rapport à la ligne de séparation (42) entre le côté usinage et le côté chargement.

9. Machine-outil selon l'une des revendications précédentes, caractérisée en ce que le dispositif (26, 27, 28) pour le relèvement, le pivotement et l'abaissement de la partie supérieure (20), comporte un arbre central (28), qui à son extrémité supérieure est relié rigidement à la partie supérieure (20) et qui est relié à un dispositif d'entraînement en translation et en rotation pour le relèvement, le pivotement et l'abaissement de la partie supérieure (20).
